# FASCICULE DE BREVET EUROPEEN

(11) **EP 1 378 725 B1**
(45) Date de publication et mention de la délivrance du brevet: **19.05.2010**
(21) Numéro de dépôt: 03013612.1
(22) Date de dépôt: 16.06.2003
(51) Int. Cl.: G01D 5/20

(54) **Capteur inductif de position**
Induktiver Stellungsgeber
Inductive position sensor

(30) Priorité: 03.07.2002 CH 11622002
(43) Date de publication de la demande: 07.01.2004
(73) Titulaire: Meyer, Hans Ulrich, 1110 Morges (CH)
(72) Inventeur: Meyer, Hans Ulrich, 1110 Morges (CH)
(74) Mandataire: Micheli & Cie SA

(56) Documents cités:
- EP-A- 0 785 415
- EP-A- 0 908 702

## Description

La présente invention a pour objet un capteur inductif de position comportant une règle et un curseur mobiles l'un par rapport à l'autre le long d'un chemin de mesure, la règle comportant un ou des conducteurs formant une série de boucles conductrices espacées d'un pas T le long du chemin, le curseur comportant des conducteurs inducteurs et induits, reliés à un circuit électronique de mesure et formant chacun une série de lacets de sens alterné espacés d'un pas T le long du chemin.

On connaît du brevet CH 690 933 un capteur inductif de position comportant les caractéristiques du préambule de la revendication 1. La position entre la règle et le curseur le long du chemin se détermine par la mesure des couplages entre conducteurs inducteurs et induits du curseur par l'intermédiaire des conducteurs de la règle. Les champs magnétiques générés et détectés par les conducteurs du curseur et de la règle d'un tel capteur ont une alternance de polarité à chaque pas T le long du chemin de mesure. Ce capteur est insensible à des champs magnétiques d'intensité et de direction homogènes, tels que générés par des sources externes au capteur, le courant qu'ils induisent dans deux lacets de sens alterné étant nul.

Dans un premier mode d'exécution décrit dans le brevet cité, les conducteurs du curseur sont séparés, atténuant fortement les couplages directs entre conducteurs inducteurs et induits du curseur. Mais, comme chaque conducteur n'est vis-à-vis que d'une fraction de la surface de la règle en regard du curseur, les couplages entre conducteurs inducteurs et induits du curseur par l'intermédiaire des conducteurs de la règle sont aussi réduits. En outre, les erreurs d'alignement entre règle et curseur provoquent des inégalités entre ces couplages et faussent la mesure.

Dans un second mode d'exécution décrit dans le brevet cité les conducteurs du curseur sont tous imbriqués: comme chaque conducteur du curseur fait face à toute la surface de la règle en regard du curseur, les couplages entre conducteurs inducteurs et induits du curseur par l'intermédiaire des conducteurs de la règle atteignent leur niveau maximum. Les erreurs d'alignement entre règle et curseur n'influencent que peu la mesure, les couplages étant tous ici affectés de manière sensiblement égale. Mais les couplages directs entre conducteurs du curseur sont importants et donnent lieu à des erreurs de mesure d'autant plus grandes que les couplages par la règle seront faibles, donc que l'écart entre curseur et règle sera grand.

Afin d'arriver à une précision de mesure meilleure et indépendante dudit écart, il faut rendre les couplages directs négligeables par rapport aux couplages par la règle, et ces derniers doivent rester insensibles aux erreurs d'alignement entre règle et curseur.

A ces fins, la présente invention est caractérisée en ce que les conducteurs du curseur sont agencés en au moins un premier groupe et en au moins un second groupe séparé du premier groupe, chaque groupe comportant N conducteurs imbriqués les uns dans les autres et décalés d'un multiple de T/N, le premier groupe étant formé des conducteurs inducteurs et le second groupe étant formé des conducteurs induits, le couplage entre conducteurs inducteurs et induits des premiers et second groupes se faisant par l'intermédiaire des conducteurs de la règle.

Ces caractéristiques permettent d'obtenir un capteur bien moins sensible à des variations d'écart entre le curseur et la règle, en éliminant les couplages directs néfastes entre conducteurs du curseur tout en maintenant les couplages par la règle à la moitié de leur niveau maximum. Les groupes séparés de N conducteurs permettent d'activer N configurations, identiques mais décalées de T/N, d'au moins un conducteur inducteur et un induit. L'absence des couplages directs ainsi que des couplages plus uniformes via la règle, obtenue en groupant ensemble les conducteurs inducteurs d'une part et les induits de l'autre, rend plus uniforme les couplages périodiques en fonction de la position x dans ces N configurations, ce qui permet de déterminer cette dernière avec plus de précision, même pour des écarts relativement grands entre règle et curseur.

De manière optimale, les conducteurs de chacun des deux groupes du curseur forment des méandres ou des zigzags aller-retour le long du chemin de mesure. Le couplage magnétique direct entre un zigzag aller-retour inducteur et un induit décroît fortement avec leur éloignement, étant donné que chacun forme une série de boucles d'induction ou induites quasiment fermées, de polarité alternée, dont les effets tendent à se compenser. De plus, comme un zigzag aller-retour est une ligne fermée, il peut être interrompu n'importe où pour être connecté au circuit de mesure par une paire de conducteurs très rapprochés dont la contribution à l'inductance, donc au couplage, est négligeable. Pour une séparation donnée entre les groupes inducteurs et induits, l'écart entre règle et curseur peut donc varier davantage, permettant un alignement plus simple du curseur le long de la règle.

Dans un mode d'exécution préféré, la règle comporte une série de boucles conductrices fermées, et les premier et second groupes de conducteurs inducteurs et induits du curseur se trouvent côte à côte le long du même tronçon du chemin de mesure. Les courants induits dans la règle ne se propagent par conséquent en travers du chemin de mesure plutôt que le long de celui-ci, rendant le capteur insensible aux champs magnétiques agissant dans la partie de la règle n'étant pas face au curseur.

Dans un tel mode d'exécution, un groupe de conducteurs peut s'étendre au-delà de l'autre dans chaque sens le long du chemin de mesure, ce qui donne un couplage uniforme par la règle sur toute l'étendue du groupe plus court, donc aussi entre n'importe quel conducteur inducteur et n'importe quel conducteur induit ayant un même décalage le long du chemin x.

Dans un mode d'exécution préféré d'un capteur conforme à l'invention, le curseur comporte trois conducteurs inducteurs et trois conducteurs induits, les zigzags des conducteurs inducteurs ainsi que ceux des induits étant décalés entre eux de T/3, selon le chemin de mesure, la position selon le chemin de mesure de chaque conducteur inducteur coïncidant avec celle d'un conducteur induit. Un circuit électronique mesure le couplage de chaque conducteur inducteur aux deux conducteurs induits décalés de celui-ci et reliés en série, afin d'être équivalents à celui d'un conducteur induit virtuel situé entre-deux, et donc décalé de T/2 du conducteur inducteur. Ceci élimine la composante continue du couplage en fonction de la position. Les zigzags ayant une forme approximativement sinusoïdale de période 2T, on obtient ainsi trois signaux sinusoïdaux de période T en fonction de la position x, décalés entre eux de T/3. Avec les signaux complémentaires obtenus en inversant par exemple la polarité des conducteurs induits, on obtient une séquence répétitive de six signaux, dont les couplages périodiques en fonction de la position x du curseur par rapport à la règle sont progressivement décalés entre eux de T/6.

Le circuit électronique est par conséquent agencé pour activer en séquence répétitive six configurations d'un conducteur inducteur et de deux conducteurs induits reliés en série, dont les couplages en fonction de la position du curseur le long du chemin de mesure sont progressivement décalées de T/6, la différence de phase entre la composante fondamentale de la séquence répétitive des mesures échantillonnées et un signal de référence étant une fonction linéaire de la position le long du chemin.

Dans un autre mode d'exécution d'un capteur conforme à l'invention, le curseur comporte deux conducteurs inducteurs et deux conducteurs induits, les zigzags des deux conducteurs inducteurs ainsi que ceux des deux conducteurs induits étant décalés entre eux de T/2 selon le chemin de mesure, les zigzags des conducteurs inducteurs et induits étant décalés entre eux de T/4 selon le chemin de mesure.

Le circuit électronique est préférablement agencé pour mesurer les quatre couplages de chaque conducteur inducteur à chaque conducteur induit via la règle, la polarité de mesure de chaque couplage étant fixée afin que les quatre couplages mesurés en fonction de la position du curseur le long de la règle soient quatre sinusoïdes de période T progressivement décalés de T/4, ayant la même amplitude et la même composante continue.

Cette composante continue peut donc être rejetée, par exemple en mesurant séquentiellement ces quatre couplages. La symétrie entre les deux conducteurs inducteurs, et entre les deux induits, facilite l'appairage des inductances et des comportements en ligne de transmission nécessaires à un couplage uniforme entre les conducteurs inducteurs et induits.

Plusieurs modes d'exécution de la règle sont avantageux: la règle peut consister en une structure conductrice en échelle dont chaque échelon est commun à deux boucles conductrices fermées par les montants et les échelons voisins. Elle peut consister en un circuit imprimé sur un substrat isolant ou ferromagnétique: il est alors possible d'avoir une ou plusieurs boucles conductrices séparées, pour diminuer encore plus les couplages le long de la règle. Par contre, si les conducteurs inducteurs et induits du curseur ne sont pas côte à côte mais se suivent l'un l'autre, les couplages se transmettent le long de la règle, par exemple au moyen d'un conducteur en zigzag aller-retour. La règle et le curseur peuvent être cylindriques avec un déplacement axial, les conducteurs de la règle étant des anneaux, les conducteurs inducteurs et induits du curseur étant côte à côte, d'où un petit diamètre et une mesure insensible à la rotation axiale. Pour un capteur de rotation, le conducteur de la règle peut être un zigzag fermé sur lui-même.

D'autres avantages ressortent des caractéristiques exprimées dans les revendications dépendantes et de la description exposant ci-après l'invention plus en détail à l'aide de dessins représentant schématiquement et à titre d'exemple des modes d'exécution préférés.

La figure 1 montre en exemple la règle et le curseur d'un capteur conforme à l'invention.

La figure 2 représente schématiquement comme exemple un circuit électronique de mesure d'un capteur conforme à l'invention.

Les figures 3A et 3B montrent une configuration de deux conducteurs inducteurs et de deux conducteurs induits d'un capteur conforme à l'invention et les couplages entre eux en fonction de la position du curseur le long de la règle.

Les figures 4A à 4E montrent différentes règles pour des capteurs conformes à l'invention.

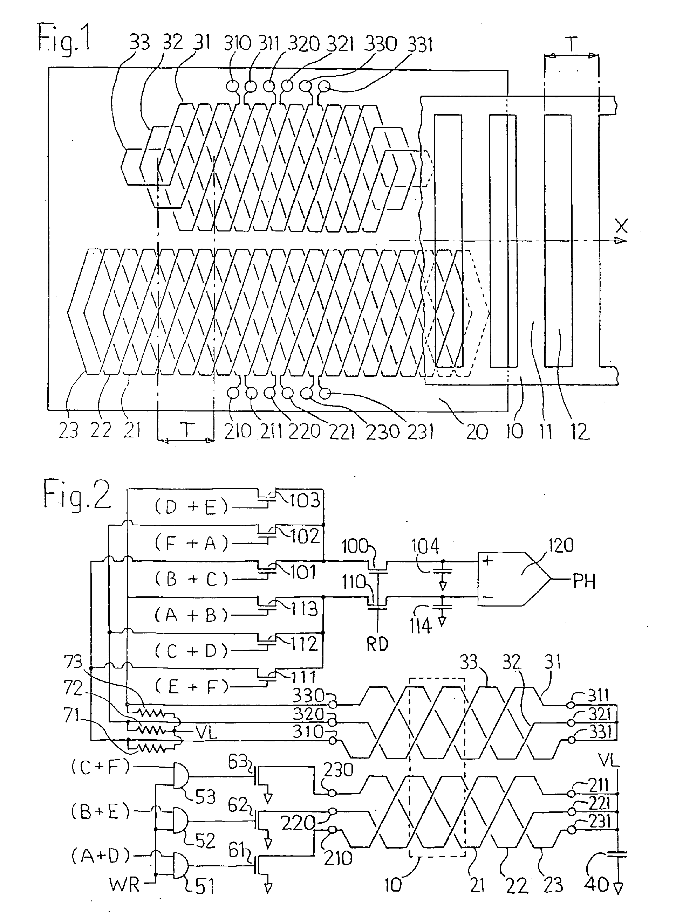

La règle 10 et le curseur 20 mobiles d'un capteur conforme à l'invention sont représentés à la figure 1; ils se déplacent l'un par rapport à l'autre selon un chemin de mesure x, ici rectiligne. La surface du curseur 20 en regard de la règle est représentée, ainsi qu'une partie de la règle 10 seulement, pour que le curseur 20 reste visible. Les plans des surfaces en regard de la règle 10 et du curseur 20 sont parallèles au plan de la figure.

La règle 10 est un ruban conducteur en forme d'échelle dont les échelons 11 sont espacés d'un pas T, donnant lieu à une série de boucles conductrices également espacées de T. Chaque boucle conductrice se ferme sur elle-même autour d'une ouverture 12 entre deux échelons 11.

Le curseur 20 a deux groupes de N=3 conducteurs imbriqués, chaque conducteur formant un zigzag d'une période spatiale de 2T dont les lacets successifs de sens alterné sont donc espacées du pas T le long du chemin. Les conducteurs inducteurs 21, 22, 23 constituent un groupe, et les conducteurs induits 31, 32, 33 constituent l'autre. Ces deux groupes sont disposés côte à côte le long du chemin de mesure x.

Alternativement, dans les cas où la règle est formée d'un conducteur en zigzag fermé, les deux groupes peuvent se suivre le long du chemin de mesure x, puisque les courants induits dans la règle circulent aussi le long de celle-ci. Mais dans la description qui suit, la règle comporte une série de boucles conductrices fermées et les groupes de conducteurs imbriqués du curseur sont côte à côte. Les avantages d'un tel mode d'exécution sont le degré de couplage indépendant de la longueur de la règle et l'insensibilité aux courants induits dans la partie de la règle située en-dehors du curseur, ceux-ci circulant en travers du chemin de mesure plutôt que le long de celui-ci.

Le couplage d'un conducteur inducteur 21, 22 ou 23 à un induit 31, 32 ou 33 se fait par l'intermédiaire des conducteurs de la règle. Comme un conducteur inducteur forme une série de lacets de sens alterné, le couplage d'un conducteur inducteur à une boucle de la règle est périodique en fonction de la position x, de période 2T, puisqu'il est maximum à chaque pas T, quand les lacets du conducteur inducteur se trouvent face à une boucle de la règle, et que la polarité du couplage change d'un lacet au suivant. Les courants induits dans les boucles voisines de la règle ont aussi des polarités opposées. Dans la règle 10 en échelle de la figure 1 le sens du courant alterne donc d'échelon à échelon. Par analogie, le couplage d'une boucle de la règle à un conducteur induit en fonction de x est également périodique avec une période de 2T. Le couplage d'un conducteur inducteur à un induit par la règle en fonction de la position x est le produit de ces deux couplages ayant une période de 2T en fonction de x: il sera donc également une fonction périodique de x, mais de période T. Le couplage d'un autre conducteur inducteur, décalé de T/N, ici T/3, du précédent, à un autre conducteur induit, également décalé de T/3 du précédent, sera une même fonction de période T selon x, décalée de T/3 de la précédente. Ceci, pour autant que la contribution des couplages directs des inducteurs aux induits reste négligeable.

Pour améliorer les couplages par la règle 10 et surtout pour fortement réduire les couplages directs, les conducteurs 21, 22, 23, 31, 32, 33 du curseur forment le long du chemin de mesure x des zigzags aller-retour. Le couplage magnétique direct entre un zigzag aller-retour inducteur et un induit décroît fortement avec leur éloignement, étant donné que chacun forme une série de boucles d'induction ou induites quasiment fermées, de polarité alternée, dont les contributions au couplage tendent à se compenser. De plus, un zigzag aller-retour forme un tracé refermé sur lui-même et peut donc être connecté au circuit de mesure par deux conducteurs très rapprochés dont la contribution à l'inductance et donc au couplage est négligeable. Autrement dit, les conducteurs en zigzag aller-retour inducteurs 21, 22, 23 ont donc des champs très faibles en-dehors de leur périmètre, puisque les effets des boucles de courant de sens de rotation opposé formées par le tracé s'y compensent, et les conducteurs induits 31, 32, 33 de même forme sont insensibles à des champs extérieurs, qui tendent à être homogènes dans la zone des induits. Les connexions au circuit électronique de mesure se font par des lignes bifilaire à partir des extrémités 210-211, 220-221, 230-231, 310-311, 320-321, 330-331 des conducteurs 21, 22, 23, 31, 32, 33 respectivement.

Pour que la mesure soit juste, il faut que les couplages via la règle de n'importe quel conducteur inducteur à n'importe quel conducteur induit ayant le même décalage l'un par rapport selon le chemin x soient uniformes. C'est le cas lorsque le chemin x est un cercle et que les conducteurs inducteurs et induits occupent tout le pourtour. C'est aussi le cas pour un chemin rectiligne, si un groupe de conducteurs imbriqués du curseur s'étend bien au-delà de l'autre dans les deux sens le long du chemin de mesure x, ce qui donne un couplage uniforme par la règle sur toute l'étendue du groupe plus court, donc aussi entre n'importe quel conducteur inducteur et n'importe quel conducteur induit ayant un même décalage le long du chemin x. Dans l'exécution montrée à la figure 1 c'est le groupe des conducteurs inducteurs 21, 22, 23 qui est plus long que celui des conducteurs induits 31, 32, 33: les champs électromagnétiques spatialement périodiques des conducteurs inducteurs 21, 22, 23, et par conséquent ceux de la règle 10, ont donc une amplitude constante sur l'étendue des conducteurs induits, assurant un couplage uniforme, pour autant que chaque conducteur induit 31, 32, 33 ait la même étendue, ce qui est le cas ici.

L'insensibilité d'un capteur conforme à l'invention aux liquides (eau, huile, encre), aux poussières, aux champs électriques et magnétiques, ainsi que sa tolérance aux erreurs d'écart et d'alignement entre curseur et règle, permet de l'utiliser dans la plupart des cas sans protection et sans blindage, et avec un guidage extérieur simple : les coûts d'installation et d'utilisation d'un tel capteur sont donc minimes, ce qui le prédestine à des applications à bas prix. Il faut donc que le dimensionnement du capteur soit compatible avec un procédé de fabrication économique tout en assurant une précision de mesure suffisante. Le pas T ne doit être ni trop grand, pour limiter l'erreur d'interpolation, qui augmente avec T, ni trop petit, afin de ne pas trop limiter l'écart entre règle et curseur, le couplage des conducteurs inducteurs via la règle aux induits diminuant de moitié pour une augmentation d'écart entre curseur et règle de 0,11T. Pour une précision de quelques micromètres et un écart de quelques dixièmes de millimètre, un pas T d'un à deux millimètres est optimal. Pour une fabrication en circuit imprimé du curseur, le nombre N de conducteurs par groupe doit donc être faible afin que l'espacement T/N de deux lignes voisines reste raisonnable et accessoirement pour réduire le nombre de connexions à l'électronique de mesure. Le curseur 20 de la figure 1 a seulement N=3 conducteurs par groupe.

Pour un capteur conforme à l'invention, le couplage entre conducteurs du curseur par la règle en fonction de la position x est périodique, de période égale au pas T. Les conducteurs (21 à 23, 31 à 33) en zigzag du curseur 20 montrés à la figure 1 ont une forme proche d'une sinusoïde de période 2T: le couplage en fonction de la position x d'un conducteur inducteur à la règle, ainsi que de la règle à un conducteur induit, est donc pratiquement une sinusoïde, de période 2T égale à celle d'un zigzag. Le couplage en fonction de la position x d'un conducteur inducteur via la règle à un conducteur induit est donc le produit de deux tels sinusoïdes de période 2T, c'est-à-dire une sinusoïde de période T plus une composante continue qui s'annule si le conducteur inducteur et induit sont décalés de T/2, ce qui est le cas dans cette exécution.

Il convient de remarquer ici que les composantes harmoniques résiduelles du couplage en fonction du chemin x s'atténuent fortement avec l'écart entre règle et curseur : une augmentation d'écart peut donc améliorer la linéarité tant que l'effet des couplages directs reste négligeable.

Les trois conducteurs inducteurs 21, 22, 23, décalés entre eux de T/3, et les trois conducteurs induits 31, 32, 33, aussi décalés entre eux de T/3, ayant respectivement la même position dans un pas T le long du chemin de mesure x, il faut combiner deux induits en un seul induit équivalent à un induit virtuel décalé de l'inducteur de T/2, afin d'éliminer la composante continue du couplage. Pour le conducteur inducteur 21, l'induit virtuel correspondant, situé entre les conducteurs induits 32 et 33, est obtenu en reliant ces derniers en série par leurs extrémités 321 et 331, le signal étant mesuré entre les extrémités 320 et 330 (configuration a). De même pour le conducteur inducteur 22, les conducteurs induits 33 et 31 sont reliés en série par leurs extrémités 331 et 311 (configuration e) et pour le conducteur inducteur 23, les conducteurs induits 31 et 32 sont reliés en série par leurs extrémités 311 et 321 (configuration c).

Ces trois configurations de couplage sont décalées entre elles de 2T/3 le long du chemin x. Les trois couplages sinusoïdaux en fonction de x sont donc également décalés entre eux de 2T/3, ou de T/3 dans l'autre sens, comme leur période est T. Les mesure inverses sont faites avec les configurations d, b, f, ayant les mêmes configurations de conducteurs inducteurs et induits reliés en série que les mesures a, e, c respectivement, mais en inversant les connexions des induits reliées au circuit de mesure, ce qui a pour effet de décaler leurs fonctions de couplage de T/2. C'est seulement le cas parce qu'ici la composante continue du couplage susmentionné est nulle. On obtient finalement les six configurations suivantes, dont les couplages sinusoïdaux en fonction de x sont décalés progressivement de T/6:
a) inducteur 21, induits 32 et 33 en série,
b) inducteur 22, induits 31 et 33 en série,
c) inducteur 23, induits 31 et 32 en série,
d) inducteur 21, induits 33 et 32 en série,
e) inducteur 22, induits 33 et 31 en série,
f) inducteur 23, induits 32 et 31 en série.

En mesurant le couplage des configurations a, b, c, d, e, f en séquence répétée, on obtient donc un signal sinusoïdal échantillonné dont la période en l'absence de déplacement entre curseur et règle est égale à celle de la séquence, et dont la phase, par rapport à celle d'un signal ayant la même période que la séquence, a une relation linéaire avec la position x du curseur par rapport à la règle le long du chemin de mesure.

Le circuit électronique de mesure représenté schématiquement dans la figure 2 est connecté aux conducteurs inducteurs 21, 22, 23 et induits 31, 32, 33 du curseur. La règle 10 est représentée symboliquement comme élément de couplage dans la figure 2 par une de ses boucles conductrices, dessinée en pointillé. Le circuit électronique est réalisé en technologie CMOS, les transistors 61 à 63, 100 à 103, 110 à 113 étant des FET à canal N à enrichissement. Les extrémités 211, 221, 231 des conducteurs inducteurs 21, 22, 23sont reliées à la source de tension VL ainsi qu'à un condensateur 40 maintenant une basse impédance aussi à des fréquences élevées. Les autres extrémités 210, 220, 230 des conducteurs inducteurs sont reliées respectivement aux drains des transistors 61, 62, 63, dont les sources sont à la masse et dont les grilles sont reliées respectivement aux sorties des portes logiques "ET" 51, 52, 53. Les extrémités 311, 321, 331 des conducteurs induits 31, 32, 33 sont reliées ensemble, les autres connections 310, 320, 330 étant chacune reliées à la source de tension VL par les résistances 71, 72, 73 de terminaison de ligne, ainsi qu'aux canaux source-drain de deux transistors, respectivement 101 et 111, 102 et 112, 103 et 113. L'autre extrémité des canaux des transistors 101, 102, 103, respectivement 111, 112, 113, est connectée par l'intermédiaire des transistors d'échantillonnage 100, respectivement 110, reliées aux condensateurs 104, respectivement 114, qui sont connectés aux entrées différentielles d'un circuit de traitement de signal 120, qui fournit le signal logique PH à sa sortie. Les signaux logiques de commande A, B, C, D, E, F enclenchant les configurations de mesure a, b, c, d, e, f décrites plus haut, sont activés un à un en séquence. Ces signaux logiques de commande sont combinés en expressions logiques "OU" dans la figure 2: par exemple (A+D) signifie "A OU B". Les signaux combinés (A+D), (B+E), (C+F) commandent une entrée des portes "ET" 51, 52, 53. Les signaux combinés (B+C), (F+A), (D+E), (E+F), (C+D), (A+B) commandent respectivement les grilles des transistors 101, 102, 103, 111, 112, 113. Les deux autres signaux logiques de commande sont les impulsions d'écriture WR et de lecture RD, activées une fois pendant chaque configuration de mesure a, b, c, d, e et f. Le signal WR commande les entrées restantes des portes "ET" 51, 52, 53. Le signal RD commande les grilles des transistors d'échantillonnage 100 et 110.

Le signal de commande A, B, C, D, E, ou F activé sélectionne une des portes "ET" 51, 52, 53 et relie deux des conducteurs induits en série aux transistors échantillonneurs 100 et 110 respectivement au travers d'un des transistors 101, 102 ou 103, et d'un des transistors 111, 112 ou 113. L'impulsion d'écriture WR active alors la porte "ET" sélectionnée, qui par l'intermédiaire d'un des transistors 61, 62 ou 63 met l'extrémité d'un conducteur inducteur 210, 220 ou 230 à la masse. L'autre extrémité étant au potentiel VL, un courant circule alors dans l'inducteur, et des différences de potentiel dues au couplage induit par la règle apparaissent entre les extrémités des induits. L'impulsion de lecture RD, activée pendant l'impulsion d'écriture WR, enclenche les transistors échantillonneurs 100 et 110, laissant les condensateurs 104 et 114 emmagasiner le potentiel des deux extrémités d'induits déjà reliées au transistors échantillonneurs. Les résistances de terminaison de ligne 71, 72, 73, reliées à une source de tension convenable, ici VL par souci d'économie, éliminent les réflexions de signaux indésirables aux extrémités 310, 320, 330 des conducteurs induits. Après un temps court de l'ordre de 20 nanosecondes l'impulsion d'écriture RD se termine la première, suivie de celle de lecture WR. Les condensateurs 104 et 114 conservent alors leur potentiel jusqu'à la prochaine impulsion de lecture. Le circuit de traitement de signal 120 amplifie la différence de ces potentiels, élimine les perturbations harmoniques dues à l'échantillonnage, et transforme le signal sinusoïdal filtré en un signal de sortie rectangulaire PH par un comparateur. Le déphasage entre ce signal PH et un signal de référence de période identique à celle de la séquence répétitive A, B, C, D, E, F est mesuré en permanence pour tenir compte du nombre de périodes complètes parcourues. Ceci permet de calculer la position x du curseur le long de la règle, le déphasage étant une fonction linéaire de cette position.

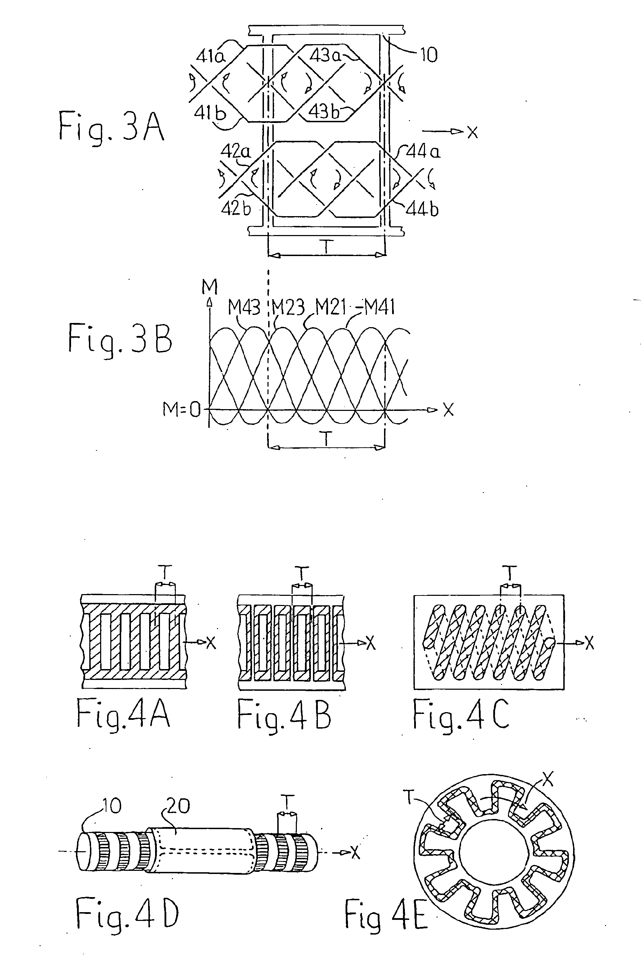

Il est également possible, comme le montre en exemple la figure 3A, d'avoir une exécution n'ayant que deux conducteurs inducteurs (42a, 42b et 44a, 44b) et deux conducteurs induits (41a, 41b et 43a, 43b) sur le curseur. Chaque conducteur forme un zigzag aller-retour, c'est-à-dire une série de boucles équivalant à autant de boucles fermées de courant. Pour plus de clarté, il n'est montré à la figure 3A qu'une telle boucle par conducteur, constituée d'un lacet "aller" (suffixe a) et d'un lacet "retour" (suffixe b) le long du chemin de mesure. La règle (10) est aussi représentée par une de ses boucles conductrices.

Pour que le couplage, ou rapport de transformation, de chaque conducteur inducteur à chaque conducteur induit via la règle varie uniformément en fonction de x, il faut que le décalage absolu mesuré selon x soit le même entre chaque zigzag inducteur et chaque zigzag induit, puisque le couplage, étant le produit des couplages inducteur-règle et règle-induit, est constant pour un décalage donné entre conducteur inducteur et induit et pour un décalage donné d'une boucle de la règle par rapport à ces deux conducteurs. Dans l'exemple de la figure 3A, les deux zigzags des conducteurs inducteurs entre eux, de même que les deux zigzags des conducteurs induits entre eux sont décalés de T/2, et les zigzags des induits sont décalés de T/4 des inducteurs. Les quatre couplages ou rapports de transformation entre chaque conducteur inducteur et chaque conducteur induit sont les suivants:
- couplage M21: entre le conducteur inducteur 42a, 42b et le conducteur induit 41a, 41b,
- couplage M23: entre le conducteur inducteur 42a, 42b et le conducteur induit 43a, 43b,
- couplage M43: entre le conducteur inducteur 44a, 44b et le conducteur induit 43a, 43b,
- couplage M41: entre le conducteur inducteur 44a, 44b et le conducteur induit 41a, 41b.

La figure 3B représente les couplages ou rapports de transformation M21, M23, M43 et -M41 en ordonnée (M), en fonction de la position du curseur sur la règle le long du chemin de mesure, en abscisse (x). La position du curseur sur la règle de la figure 3A est représentée par la ligne en pointillé dans la figure 3B. Pour cette position, les couplages M21 et -M41 sont nuls à cause de l'absence de couplage entre la règle 10 et le conducteur induit 41a, 41b, décalés de T/2 dans la figure 3A.

La polarité du couplage ou du rapport de transformation M41 est inversée (-M41) dans la figure 3B. En effet, en tenant compte de la polarité des boucles des zigzags, donnée par les connexions des conducteurs au circuit électronique et montrée par des flèches dans la figure 3A, le décalage entre boucles inductrices et induites égale T/4 pour les couplages M21, M23, M43, mais est de 5T/4 pour M41. Pour avoir quatre décalages égaux à T/4, le zigzag inducteur 44 ou le zigzag induit 41 doivent être décalés électriquement de T pendant la mesure du couplage M41. Ceci revient à inverser les connexions de l'inducteur 44 ou de l'induit 41, donc à mesurer le couplage inversé -M41. Plus généralement, quelle que soit la polarité de chaque boucle, la géométrie de conducteurs décrite ci-dessus et montrée à la figure 3A donnera toujours des décalages égaux entre boucles inductrices et induites pour les quatre mesures de couplage, si pour l'une d'entre elles la polarité est inversée, par exemple en inversant les connexions d'un conducteur pour une mesure.

Leur polarité de mesure correcte ainsi fixée, les couplages ou rapports de transformation M21, M23, M43 et -M41 représentés en fonction de la position x du curseur le long de la règle dans la figure 3 sont alors quatre sinusoïdes de période T décalées entre elles de T/4, avec la même amplitude et la même composante continue, comme ils sont tous mesurés entre zigzags inducteurs et induits décalés de la même distance T/4, en tenant compte de la polarité des boucles du zigzag. La position x du curseur sur la règle peut alors être dérivée aisément de ces couplages, par exemple comme suit: la dite composante continue peut être rejetée en mesurant séquentiellement les quatre couplages en séquence répétitive et en l'éliminant par filtrage, pour avoir une sinusoïde échantillonnée dont la phase est proportionnelle à x.

Avec un tel curseur ne comportant que deux conducteurs inducteurs et deux conducteurs induits, il est facile, par une disposition symétrique, d'appairer les inductances et plus généralement les caractéristiques de ligne de transmission des deux conducteurs imbriqués de chaque groupe pour avoir des couplages uniformes, assurant une meilleure précision de mesure.

La règle 10 en échelle montrée à la figure 1 peut être réalisée également en circuit imprimé, comme le montre la figure 4A. Le substrat peut être diélectrique ou ferromagnétique: dans ce dernier cas, on peut avoir une amélioration du signal couplé, même pour un substrat conducteur, comme c'est le cas pour certains aciers, dont les propriétés mécaniques peuvent être intéressantes. Sur un substrat, le conducteur peut consister en une série de boucles mutuellement isolées, comme à la figure 4B: l'avantage est que le couplages le long de la règle est empêché. Si par contre les groupes de conducteurs inducteurs et induits du curseur ne sont pas côte à côte mais se suivent l'un l'autre, par exemple pour limiter la largeur du capteur, le signal doit être couplé tout le long de la règle. C'est le cas pour la règle de la figure 4C, dont le conducteur forme un zigzag aller-retour utilisant deux couches de métal, dont l'une est représenté en pointillé. Une autre exécution limitant l'encombrement latéral et idéale pour des palpeurs cylindriques est montrée à la figure 4D : une règle 10 et un curseur 20 cylindriques et coaxiaux, pour des déplacements axiaux. Les groupes de conducteurs imbriqués dont les périmètres sont indiqués en pointillé, s'étendent côte à côte sur le curseur 20, occupant la même portion de l'axe, et les conducteurs de la règle 10 sont des anneaux coaxiaux distants de T: le diamètre peut être petit et la mesure est insensible à la rotation autour de l'axe. D'autres modes d'exécution conviennent pour des capteurs rotatifs, par exemple la règle en forme de disque avec un conducteur en zigzag de la figure 4E.

L'invention n'est bien sûr pas limitée aux modes d'exécution et variantes ci-dessus, qui concernent majoritairement des capteurs dont la règle est plus longue que le curseur. Mais ces exécutions fonctionneraient aussi avec des règles plus courtes, ne comportant à la limite qu'une seule boucle conductrice, à condition que les conducteurs de la règle restent bien en-deçà des extrémités des conducteurs du curseur pour tout le domaine de mesure.

## Revendications

1. Capteur inductif de position comportant une règle (10) et un curseur (20) mobiles l'un par rapport à l'autre le long d'un chemin de mesure (x), la règle (10) comportant un ou des conducteurs formant une série de boucles espacées d'un pas T le long du chemin, le curseur (20) comportant des conducteurs inducteurs (21 à 23; 42, 44) et induits (31 à 33; 41, 43) reliés à un circuit électronique de mesure et formant chacun une série de lacets de sens alterné espacés d'un pas T le long du chemin, **caractérisé par le fait que** les conducteurs (21 à 23, 31 à 33; 41 à 44) du curseur (20) sont agencés en au moins un premier groupe et en au moins un second groupe séparé du premier groupe, chaque groupe comportant N conducteurs imbriqués les uns dans les autres et décalés d'un multiple de T/N, le premier groupe étant formé des conducteurs inducteurs (21 à 23; 42, 44), et le second groupe étant formé des conducteurs induits (31 à 33; 41, 43), le couplage entre conducteurs inducteurs et induits des premiers et second groupes se faisant par l'intermédiaire des conducteurs de la règle (10).

2. Capteur selon la revendication 1, **caractérisé par le fait que** les conducteurs (21 à 23, 31 à 33; 41 à 44) de chacun des deux groupes du curseur (20) forment des méandres ou zigzags aller-retour le long du chemin de mesure (x).

3. Capteur selon la revendication 1 ou 2, **caractérisé par le fait que** la règle (10) comporte une série de boucles conductrices fermées, et que les premier et second groupes de conducteurs inducteurs (21 à 23; 42, 44) et induits (31 à 33; 41, 43) se trouvent côte à côte sur le même tronçon du chemin de mesure (x).

4. Capteur selon la revendication 3, **caractérisé par le fait qu'**un groupe de conducteurs (21 à 23) s'étend au-delà de l'autre (31 à 33) dans les deux sens le long du chemin de mesure (x).

5. Capteur selon l'une des revendications 2 à 4, **caractérisé par le fait que** le curseur (20) comporte trois conducteurs inducteurs (21 à 23) et trois conducteurs induits (31 à 33), les zigzags des conducteurs inducteurs, ainsi que les zigzags des conducteurs induits étant décalés entre eux de T/3 le long du chemin de mesure (x), la position selon le chemin de mesure (x) de chaque conducteur inducteur coïncidant avec celle d'un conducteur induit.

6. Capteur selon la revendication 5, **caractérisé par le fait que** le circuit électronique est agencé pour activer en séquence répétitive (A, B, C, D, E, F) six configurations (a, b, c, d, e, f) d'un conducteur inducteur et de deux conducteurs induits reliés en série, dont les couplages en fonction de la position x du curseur par rapport à la règle sont progressivement décalées de T/6, la phase de la composante fondamentale de la séquence répétitive des mesures échantillonnées déterminant la position le long du chemin (x).

7. Capteur selon l'une des revendications 2 à 4, **caractérisé par le fait que** le curseur (20) comporte deux conducteurs inducteurs (42, 44) et deux conducteurs induits (41, 43), les zigzags des conducteurs inducteurs ainsi que ceux des conducteurs induits étant décalés entre eux de T/2 selon le chemin de mesure (x), les zigzags des conducteurs inducteurs et induits étant décalés entre eux de T/4 selon le chemin de mesure (x).

8. Capteur selon la revendication 7, **caractérisée par le fait que** le circuit électronique est agencé pour mesurer les quatre couplages (M21, M23, M43, M41) de chaque conducteur inducteur à chaque conducteur induit via la règle, la polarité de mesure de chaque couplage étant fixée afin que les quatre couplages mesurés (M21, M23, M43, -M41) en fonction de la position du curseur (x) le long de la règle soient quatre sinusoïdes de période T progressivement décalés de T/4, ayant la même amplitude et la même composante continue.

## Claims

1. Inductive position sensor including a scale (10) and a cursor (20) movable relatively to each other along a measuring path (x), the scale (10) including one or several conductors forming a series of conductive loops spaced along the measuring path by a pitch T, the cursor (20) including inducing conductors (21 to 23; 42, 44) and induced conductors (31 to 33; 41, 43), connected to an electronic measuring circuit and each forming a series of alternating hairpin turns spaced along the measuring path by a pitch T, **characterized in that** the cursor's (20) conductors (21 to 23, 31 to 33; 41 to 44) are arranged in at least one first group and in at least one second group separate from the first group, each group having N conductors interlinked with each other and set apart by a multiple of T/N, the first group being formed by the inducing conductors (21 to 23: 42, 44), and the second group being formed by the induced conductors (31 to 33; 41, 43), coupling between the inducing and induced conductors from the first and second groups taking place via the conductors of the scale (10).

2. Sensor according to claim 1, **characterized in that** the conductors (21 to 23, 31 to 33; 41 to 44) of each one of both cursor (20) groups form meanders or zigzags going back and forth along the measuring path (x).

3. Sensor according to claim 1 or 2, **characterized in that** the scale (10) includes a series of closed conductive loops, and the cursor's first and second groups of inducing conductors (21 to 23; 42, 44) and induced conductors (31 to 33; 41, 43) are arranged side by side on the same section of the measuring path (x).

4. Sensor according to claim 3, **characterized in that** one group of conductors (21 to 23) extends beyond the other (31 to 33) in both directions along the measuring path (x).

5. Sensor according to one of the claims 2 to 4, **characterized in that** the cursor (20) includes three inducing conductors (21 to 23) and three induced conductors (31 to 33), the zigzags of the inducing conductors, as well as those from the induced conductors being mutually shifted by T/3 along the measuring path (x), the position along the x axis of each inducing conductor coinciding with the one of an induced conductor.

6. Sensor according to claim 5, **characterized in that** the electronic circuit is arranged to activate in a repetitive sequence (A, B, C, D, E, F) six configurations (a, b, c, d, e, f) of one inducing conductor and of two induced conductors connected in series, whose couplings as a function of the cursor's position x along the scale are progressively shifted by T/6, the phase of the fundamental component of the repetitive sequence of sampled measurements determining the position along the measuring path (x).

7. Sensor according to one of the claims 2 to 4, **characterized in that** the cursor (20) includes two inducing conductors (42, 44) and two induced conductors (41, 43), the inducing conductors' zigzags as well as the induced conductors' zigzags being mutually shifted by T/2 along the measuring path (x), the inducing and induced conductor's zigzags being mutually shifted by T/4 along the measuring path (x).

8. Sensor according to claim 7, **characterized in that** the electronic circuit is arranged to measure the four couplings (M21, M23, M43, M41) from each inducing conductor to each induced conductor via the scale, each coupling's measurement polarity being set so that the four couplings measured (M21, M23, M43, -M41) as a function of the cursor's position (x) along the scale are four sine waves of period T progressively shifted by T/4, having the same amplitude and the same continuous component.

## Patentansprüche

1. Induktiver Positionsgeber, mit einem Massstab (10) und einem Schieber (20), beide im Verhältnis zueinander entlang eines Messweges (x) verschiebbar, der Massstab (10) mit einem oder mehreren Leiter die eine Folge von Schleifen mit Schrittabstand T entlang des Weges bilden, der Schieber (20) mit induktiven (21 bis 23; 42, 44) und induzierten Leiter (31 bis 33; 41, 43) die an einen elektronischen Messschaltkreis angeschlossen sind und wobei jeder Leiter im Abstand T sich folgenden Windungen in alternierendem Sinn entlang des Wegs bildet, **dadurch gekennzeichnet, dass** die Leiter (21 bis 23, 31 bis 33; 41 bis 44) des Schiebers (20) mindestens eine erste Gruppe und mindestens eine zweite, von der ersten getrennten, Gruppe bilden, jede Gruppe N Leiter enthaltend, die sich ineinander überlappen und um ein Mehrfaches von T/N versetzt sind, die erste Gruppe bestehend aus induktiven Leitern (21 bis 23; 42, 44) und die zweite Gruppe aus induzierten Leitern (31 bis 33; 41, 43), wobei die Kopplung zwischen induktiven und induzierten Leitern der ersten und zweiten Gruppen über die Leiter des Massstabes (10) erfolgt.

2. Positionsgeber nach Anspruch 1, **dadurch gekennzeichnet, dass** die Leiter (21 bis 23, 31 bis 33; 41 bis 44) jeder der beiden Gruppen des Schiebers (20) Mäander oder Hin-Rückzickzacks entlang des Messweges (x) bilden.

3. Positionsgeber nach Anspruch 1 oder 2, **dadurch gekennzeichnet, dass** der Massstab (10) eine Folge von geschlossenen Leiterschleifen beinhaltet und das die ersten und zweiten induktiven (21 bis 23; 42, 44) und induzierten (31 bis 33; 41, 43) Leitergruppen sich Seite an Seite entlang des gleichen Abschnittes des Messweges (x) befinden.

4. Positionsgeber nach Anspruch 3, **dadurch gekennzeichnet, dass** eine Leitergruppe (21 bis 23) sich über die andere (31 bis 33) hinaus in beide Richtungen entlang des Messweges (x) erstreckt.

5. Positionsgeber nach Ansprüchen 2 bis 4, **dadurch gekennzeichnet, dass** der Schieber (20) drei induktive Leiter (21 bis 32) und drei induzierte Leiter (31 bis 33) beinhaltet, die Zickzacks der induktiven Leiter sowie die Zickzacks der induzierten Leiter untereinander um T/3 entlang des Messweges (x) versetzt, die Position entsprechend des Messweges (x) von jedem induktiven Leiter zusammenfallend mit der eines induzierten Leiters.

6. Positionsgeber nach Anspruch 5, **dadurch gekennzeichnet, dass** der elektronische Schaltkreis ausgestattet ist für ein Aktivieren in Wiederholfolge (A, B, C, D, E, F) von sechs Konfigurationen (a, b, c, d, e, f) eines induktiven Leiters und zweier seriell verbundenen induzierten Leitern, deren Kopplungen entsprechend der Position x des Schiebers im Verhältnis zum Massstab progressiv um T/6 versetzt sind, wobei die Phase der fundamentalen Komponente der Wiederholfolge von Abtastmessungen die Position entlang des Weges (x) festlegt.

7. Positionsgeber nach Ansprüchen 2 bis 4, **dadurch gekennzeichnet, dass** der Schieber (20) zwei induktive Leiter (42, 44) und zwei induzierte Leiter (41, 43) beinhaltet, wobei die Zickzacks der induktiven Leiter sowie die der induzierten Leiter untereinander um T/2 entlang des Messweges (x) versetzt sing, und die Zickzacks der induktiven und induzierten Leiter voneinander um T/4 entlang des Messweges (x) versetzt sind.

8. Positionsgeber nach Anspruch 7, **dadurch gekennzeichnet, dass** der elektronische Schaltkreis ausgestattet ist um die vier Kopplungen (M21, M23, M43, M41) von jedem induktiven Leiter an jeden induzierten Leiter über den Massstab zu messen, die Messpolarität jeder Kopplung festgelegt damit die vier gemessenen Kopplungen (M21, M23, M43, - M41) entsprechend der Position des Schiebers (x) entlang des Massstabes vier Sinuskurven der Periode T progressiv um T/4 versetzt, die gleiche Grösse und die gleiche Gleichstromkomponente habend, ergeben.
